# EUROPEAN PATENT SPECIFICATION

(11) **EP 2 824 377 B1**
(45) Date of publication and mention of the grant of the patent: **02.08.2017**
(21) Application number: 12878730.6
(22) Date of filing: 26.12.2012
(51) Int. Cl.: F16L 59/065, C03B 37/04, C03C 13/00, F16L 59/04

(54) **VACUUM HEAT INSULATING PANEL AND METHOD FOR MANUFACTURING SAME**
VAKUUMWÄRMEDÄMMPLATTE UND HERSTELLUNGSVERFAHREN DAFÜR
PANNEAU D'ISOLATION THERMIQUE SOUS VIDE ET SON PROCÉDÉ DE FABRICATION

(30) Priority: 13.06.2012 CN 201210193303
(43) Date of publication of application: 14.01.2015
(73) Proprietor: Haier Group Corporation, Qingdao, Shandong 266101 (CN); Qingdao Haier Joint Stock Co., Ltd, Shandong 266101 (CN)
(72) Inventor: ZHANG, Kui, Qingdao Shandong 266101 (CN); WANG, Liyan, Qingdao Shandong 266101 (CN); ZHU, Xiaobing, Qingdao Shandong 266101 (CN); ZHANG, Jingjing, Qingdao Shandong 266101 (CN)
(74) Representative: Ziebig, Marlene
(86) International application number: PCT/CN2012/087511
(87) International publication number: WO 2013/185461

(56) References cited:
- EP-A1- 1 275 894
- WO-A1-2011/048824
- CN-A- 102 720 923
- CN-B- 101 526 165
- CN-U- 202 074 190
- JP-A- 2012 082 954
- US-A1- 2005 175 809

## Description

### CROSS-REFERENCE TO RELATED APPLICATION

This application claims the priority to Chinese Patent Application No. 201210193303.0, filed on June 13, 2012 in the State Intellectual Property Office of P.R. China, entitled "VACUUM HEAT-INSULATING PANEL AND METHOD FOR MANUFACTURING SAME", by Xi WANG.

### FIELD OF THE INVENTION

The present invention relates generally to the field of heat-insulating materials, and more particularly, to a vacuum heat-insulating panel that can be used in a heat-preserving and heat-insulating product and a method for manufacturing the same.

### BACKGROUND OF THE INVENTION

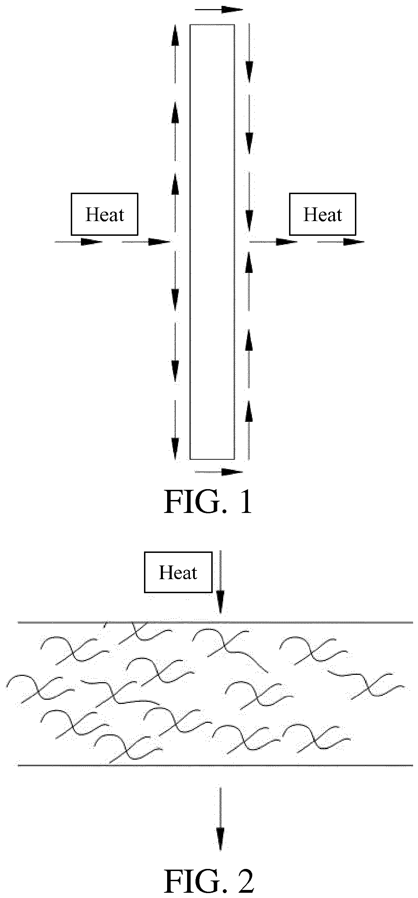

During heat transfer, a heat preserving material has a high heat conductivity coefficient, which results in severe heat loss in a refrigerator. Conventionally, vacuum heat-insulating panels used in batches by refrigerator companies to ensure heat preservation of products mainly have two problems: (1) a composite material including an aluminum foil layer is usually used as an outer packing material, which unavoidably causes a thermal bridge effect that heat is transferred through the outer wrapping material to another surface, and results in a poor heat insulation effect of a vacuum heat-insulating panel, as shown in FIG. 1; and (2) a core material is mainly manufactured by using a traditional wet process. Glass fibers of the core material are arranged in a random order, and many erect fibers act as a medium of heat transfer; therefore, heat transfer cannot be prevented effectively, as shown in FIG. 2.

A vacuum heat-insulating panel includes three parts: an inner core material (usually an assembly of glass fibers), an outer wrapping material (usually a composite material with low gas permeability and water vapor permeability), and a getter (usually calcium oxide that absorbs water) placed inside. A vacuum degree of the vacuum panel directly affects the heat preservation effect, and the inner glass fiber assembled core material has the greatest impact on the vacuum degree of the vacuum panel. Currently, wet-processed core materials are usually used. According to an analysis on heat resistance during heat transfer, fibers of a wet-processed core material manufactured according to the prior art are arranged in a random order, which there exist voids and erect fibers. In an existing vacuum heat-insulating panel, heat is transferred from one end of the vacuum heat-insulating panel to the other end during heat transfer. Because many fibers are arranged erectly, heat is easily transferred through voids between the fibers and the erect fibers, the vacuum heat-insulating panel cannot effectively prevent from heat transferring, and a great amount of heat is leaked, which results in a high heat conduction coefficient and reduction of the heat preservation effect of the vacuum panel. As a result, a heat preservation function cannot be achieved effectively.

In addition, the outer wrapping material is made of a composite material including aluminum foils; therefore, a thermal bridge effect occurs easily, and heat is directly transferred through the surface of the vacuum heat-insulating panel, instead of the vacuum heat-insulating panel, which results in a poor effect of the overall heat preservation.

Therefore, a heretofore unaddressed need exists in the art to address the aforementioned deficiencies and inadequacies.

US 2005/0175809 A1 describes a vacuum heat insulator that includes a core formed by curing a fiber aggregate by means of a binding agent. The fibers have an average fiber diameter of at least 0.1 µm but at most 10 µm and are oriented perpendicular to a direction of heat transmission. The raw stock of glass fibers is manufactured by the centrifuge method.

EP 1 275 894 A1 discloses a heat insulation having as a heat insulator, a vacuum heat insulator that includes a core made of laminated sheets of an inorganic fiber, and a laminated film sandwiching the core. The laminated films on bothe sides have different lamination structures.

### SUMMARY OF THE INVENTION

The invention provides a method for manufacturing a vacuum heat-insulating panel and a vacuum heat-insulating panel obtained by the method, which can solve a problem of the poorly heat preservation effect in the prior art..

To solve the foregoing problem, the present invention adopts the following technical solutions:
In one aspect of the invention according to claim 1, a method for manufacturing a vacuum heat-insulating panel is provided, which includes the following steps:
   (a) manufacturing a core material, comprising pouring molten glass at a high temperature of 1100 °C to 1300 °C into a centrifugal head spinning at a high speed, where the spinning speed of the centrifugal head is 2000 rpm to 2500 rpm, flinging out fiber filaments, and then forming a uniform laminated structure by using a bottom suction apparatus, where the diameter of the fiber filament is 1 µm to 3 µm;
   (b) wrapping with an outer wrapping material, comprising placing a calcium oxide getter inside the core material, wrapping the core material with a composite wrapping material of which one surface or two surfaces do not include aluminum foils, and then performing heat sealing on the outer wrapping material; and
   (c) vacuumizing the core material sealed by the outer wrapping material in step (b), and then forming a vacuum heat-insulating panel.

In one embodiment, the molten glass includes the following ingredients by weight percentage: silicon dioxide 60% to 80%, aluminum oxide 3% to 5%, magnesium oxide 3% to 5%, calcium oxide 5% to 10%, boron oxide 5% to 10%, and other oxides 4% to 20%.

In one embodiment, the other oxide includes sodium oxide.

In one embodiment, the suction apparatus includes, from top to bottom, an air extracting pump, an aluminum panel, a shell iron panel, and an air-permeable adhesive tape. A hole is provided on a corresponding central position of both the shell iron panel and the aluminum panel, the air extracting pump is disposed above the hole of the aluminum panel, the bottom of the aluminum panel is clad by the shell iron panel, the air-permeable adhesive tape is pasted under the hole of the shell iron panel, and the air-permeable adhesive tape and the shell iron panel are secured to each other by using a double-faced adhesive tape.

When the wrapping material of which one surface does not include an aluminum foil is used as the outer wrapping material, one surface is made of NY15/MPET12/MEVOH15/PE50, and the other surface is made of NY15/MPET12/A17/PE50; or one surface is made of PET12/NY25/A16/HDPE50, and the other surface is made of NY25/MPET12/MEVOH12/HDPE50, where the numerals indicate thicknesses of the materials, in the unit of µm.

When a wrapping material of which two surfaces do not include aluminum foils is used as the outer wrapping material, both of the two surfaces are made of NY15/MPET12/MEVOH15/PE50, or both of the two surfaces are made of NY25/MPET12/MEVOH12/HDPE50, where the numerals indicate thicknesses of the materials, in the unit of µm.

In the disclosure, NY represents nylon, MPET represents modified polyethylene terephthalate, MEVOH represents modified ethylene-vinyl alcohol copolymer, PE represents polyethylene, HDPE represents high density polyethylene, and PET represents polyethylene terephthalate. NY15 refers to a nylon material with the thickness of 15 µm, and the others can be deducted by analogy.

In another aspect of the invention according to claim 3 a vacuum heat-insulating panel is provided, which includes an outer wrapping material and a core material, where a getter is provided inside the core material, a composite wrapping material of which one surface or two surfaces do not include aluminum foils is used as the outer wrapping material, and the core material is an assembly of glass fibers that has a uniform laminated structure, where the diameter of the glass fibers is 1 µm to 3 µm. The getter is formed of calcium oxide.

In one embodiment, when the wrapping material of which one surface does not include an aluminum foil is used as the outer wrapping material, one surface is made of NY15/MPET12/MEVOH15/PE50, and the other surface is made of NY15/MPET12/A17/PE50; or one surface is made of PET12/NY25/A16/HDPE50, and the other surface is made of NY25/MPET12/MEVOH12/HDPE50, where the numerals indicate thicknesses of the materials in the unit of µm.

In another embodiment, when the wrapping material of which two surfaces do not include aluminum foils is used as the outer wrapping material, both of the two surfaces are made of NY15/MPET12/MEVOH15/PE50, or both of the two surfaces are made of NY25/MPET12/MEVOH12/HDPE50, where the numerals indicate thicknesses of the materials, in the unit of µm.

Among other things, the present invention improves an outer wrapping material and a core material in the following two aspects:
1. Outer wrapping material: A wrapping material of which one surface or two surfaces do not include aluminum foils is used, which prevents occurrence of a thermal bridge effect.
2. Core material: An assembly of laminated glass fibers which are uniformly distributed and are fine is produced by using a new process, which can effectively prevent heat transfer.

In the process for manufacturing the core material according to one embodiment, high-temperature molten glass is poured into a centrifugal head spinning at a high speed, and fiber filaments are flung out. A uniform laminated structure is formed by using a bottom suction apparatus, and then encapsulating and molding are performed.

In certain embodiments, main ingredients of the molten glass are silicon dioxide, aluminum oxide, magnesium oxide, and calcium oxide. During conduction, heat is effectively blocked by horizontal fibers, and therefore cannot be quickly transferred from one side of the panel to the other side. The vacuum heat-insulating panel can effectively prevent heat transfer.

The vacuum heat-insulating panel according to the present invention has the following advantages:
1. The glass fibers of the core material are laminated and uniformly distributed.
2. The diameters of the glass fibers of the core material is less than 3 µm.
3. A new composite material, which has no metal layer or has no metal layer on one surface, is used as the outer wrapping material, thereby preventing a thermal bridge effect.

In addition, compared with the prior art, the present invention has the following advantages and effects:
When heat is to be transferred from the outside into a refrigerator and passes through a heat preserving layer of a body of the refrigerator, because of high vacuum degree inside the vacuum heat-insulating panel, the heat is blocked layer by layer by the glass fibers in the core material during transfer, thereby greatly reducing a heat transfer speed and providing a good heat preservation effect; besides, the wrapping material has no aluminum foil layer, which eliminates an edge effect. Therefore, the vacuum heat-insulating panel provides a good heat preservation effect.

A heat conductivity coefficient of a vacuum heat-insulating panel manufactured according to the present invention is usually less than 0.002 W/m.K, which can great improve heat preservation performance and reduce energy consumption of a refrigerator by more than 5%.

### BRIEF DESCRIPTION OF THE DRAWINGS

FIG. 1 is a schematic diagram of heat transfer in an existing vacuum heat-insulating panel with an outer wrapping material including aluminum foils;
FIG. 2 is a schematic diagram of heat conduction in an existing core material being a glass fiber assembly;
FIG. 3 is a schematic diagram of heat transfer in a vacuum heat-insulating panel with an outer wrapping material of which one surface does not include an aluminum foil according to one embodiment of the present invention;
FIG. 4 is a schematic diagram of heat conduction in a core material being a glass fiber assembly having a uniform laminated structure according to one embodiment of the present invention;
FIG. 5 is a schematic flowchart of a method for manufacturing a core material of a vacuum heat-insulating panel according to one embodiment of the present invention; and
FIG. 6 is a schematic structural diagram of a suction apparatus.

### List of Reference Numerals:

1. Centrifugal head; 2. Suction apparatus; 21. Air extracting pump; 22. Aluminum panel; 23. Shell iron panel; 24. Air-permeable adhesive tape; 25. Double-faced adhesive tape; 3. Fiber filament.

### DETAILED DESCRIPTION OF THE INVENTION

The present invention is further described in detail with reference to the accompanying drawings and embodiments in the following.

As shown in FIG. 1, a composite material including aluminum foils is used as an outer wrapping material of an existing vacuum heat-insulating panel. During transfer, heat is directly transferred through the material to another surface, which is referred to as a thermal bridge effect and results in a poor heat insulation effect.

As shown in FIG. 2, glass fibers of an inner core material of an existing vacuum heat-insulating panel are arranged in a random order; many erect fibers act as a medium of heat transfer, and heat is directly conducted through the fibers, which cannot effectively prevent heat transfer and results in a poor heat insulation effect.

The invention provides a new vacuum heat-insulating panel, which can simultaneously solve the foregoing problems.

In one aspect of the invention, a vacuum heat-insulating panel is provided, which includes an outer wrapping material and a core material, where a getter is provided inside the core material, a composite wrapping material of which one surface or two surfaces do not include aluminum foils is used as the outer wrapping material, and the core material is an assembly of glass fibers that has a uniform laminated structure, where the diameter of the glass fiber is 1 µm to 3 µm. In one embodiment, calcium oxide is used as the getter.

### EMBODIMENT 1

A vacuum heat-insulating panel is provided, which includes an outer wrapping material and a core material, where a calcium oxide getter is provided inside the core material, and a wrapping material of which one surface does not include an aluminum foil is used as the outer wrapping material, where one surface is made of NY15/MPET12/MEVOH15/PE50, which are respectively nylon with the thickness of 15 µm, modified polyethylene terephthalate with the thickness of 12 µm, modified ethylene-vinyl alcohol copolymer with the thickness of 15 µm, and polyethylene with the thickness of 50 µm, and the other surface is made of NY15/MPET12/A17/PE50, which are respectively nylon with the thickness of 15 µm, modified polyethylene terephthalate with the thickness of 12 µm, aluminum with the thickness of 17 µm, and polyethylene with the thickness of 50 µm.

### EMBODIMENT 2

A vacuum heat-insulating panel is provided, which includes an outer wrapping material and a core material, where a calcium oxide getter is provided inside the core material, and a wrapping material of which one surface does not include an aluminum foil is used as the outer wrapping material, where one surface is made of PET12/NY25/A16/HDPE50, and the other surface is made of NY25/MPET12/MEVOH12/HDPE50.

### EMBODIMENT 3

A vacuum heat-insulating panel is provided, which includes an outer wrapping material and a core material, where a calcium oxide getter is provided inside the core material, a wrapping material of which two surfaces do not include aluminum foils is used as the outer wrapping material, and both of the two surfaces are made of NY15/MPET12/MEVOH15/PE50, where the numerals indicates thicknesses, in the unit of µm.

### EMBODIMENT 4

A vacuum heat-insulating panel is provided, which includes an outer wrapping material and a core material, where a calcium oxide getter is provided inside the core material, and when a wrapping material of which two surfaces do not include aluminum foils is used as the outer wrapping material, both of the two surfaces are made of NY25/MPET12/MEVOH12/HDPE50.

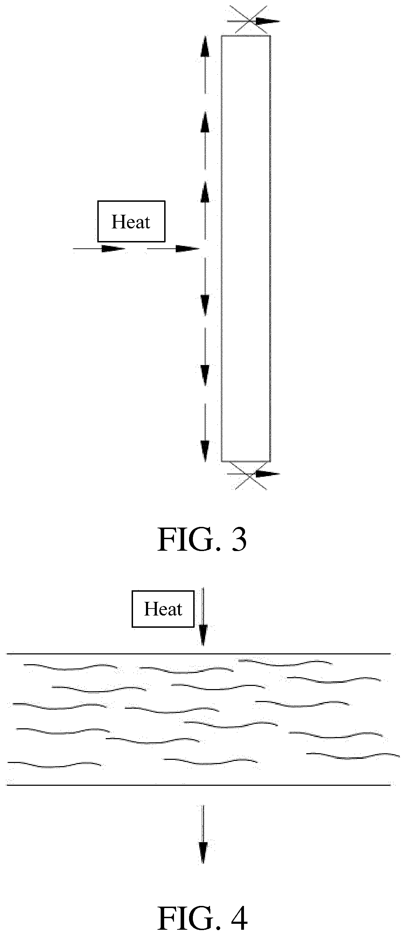

As shown in FIG. 3, during heat transfer, a vacuum heat-insulating panel according to the present invention does not cause a thermal bridge effect and has a good heat insulation effect because a composite material of which one surface does not include an aluminum foil is used as an outer wrapping material; certainly, when a wrapping material of which two surfaces do not include aluminum foils is used, the thermal bridge effect is not caused either.

As shown in FIG. 4, glass fibers of a core material according to the present invention forms a uniform laminated structure; during transfer, heat is effectively blocked by horizontal fibers and cannot be quickly transferred from one side of a panel to the other side, which can effectively prevent heat transfer and provides a good heat insulation effect.

By using the foregoing outer wrapping material and core material, heat preservation performance of a vacuum heat-insulating panel according to the present invention is greatly improved with heat conductivity coefficient being less than 0.002 W/m.K.

In another aspect of the invention, a method for manufacturing the vacuum heat-insulating panels in the foregoing EMBODIMENTS 1-4 is provided, which includes the following steps:
(1) manufacturing a core material, comprising pouring molten glass at a high temperature of 1100 °C to 1300 °C into a centrifugal head spinning at a high speed, where the spinning speed of the centrifugal head is 2000 rpm to 2500 rpm, flinging out fiber filaments, and then forming a uniform laminated structure by using a bottom suction apparatus, where the diameter of the fiber filament is 1 µm to 3 µm;
(2) wrapping with an outer wrapping material, comprising placing a calcium oxide getter inside the core material, wrapping the core material with a composite wrapping material of which one surface or two surfaces do not include aluminum foils, and then performing heat sealing on the outer wrapping material; and
(3) vacuumizing the core material sealed by the outer wrapping material in step (2), and then forming a vacuum heat-insulating panel.

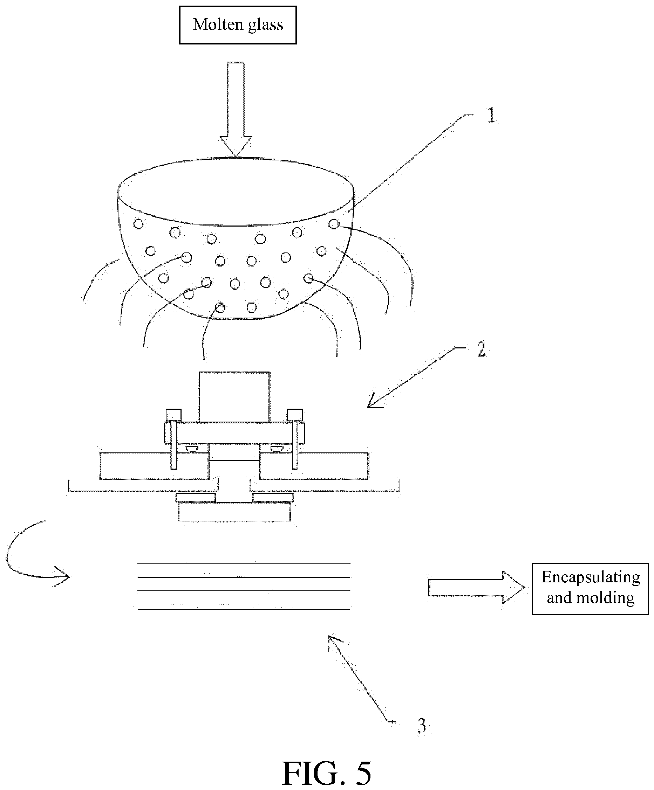

FIG. 5 is a flowchart of a process for manufacturing a core material according to one embodiment of the present invention. High-temperature molten glass is poured into a centrifugal head 1, where the centrifugal head 1 spins at a high speed of 2000 rpm to 2500 rpm, fiber filaments are flung out, and the fiber filaments that are flung out form a uniform laminated structure after passing through a suction apparatus 2, and then encapsulating and molding are performed. Because the fiber filaments are suctioned by the suction apparatus and form a uniform laminated structure, during heat transfer, heat is blocked layer by layer by the laminated fiber filaments, thereby greatly reducing a heat transfer speed and providing a good heat preservation effect.

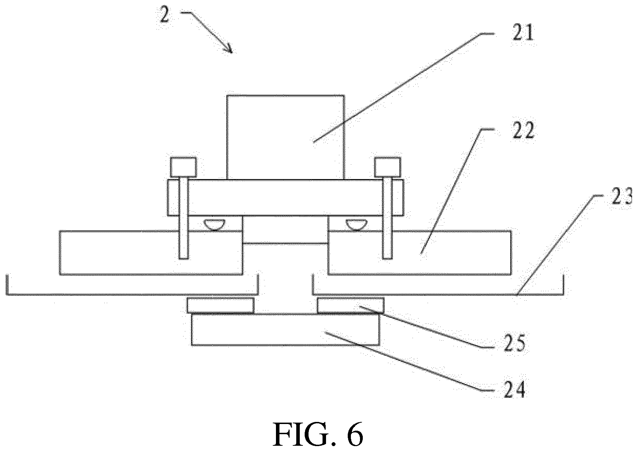

As shown in FIG. 6, a suction apparatus 2 includes, from top to bottom, an air extracting pump 21, an aluminum panel 22, a shell iron panel 23, and an air-permeable adhesive tape 24. A hole is provided on a corresponding central position of both the aluminum panel 22 and the shell iron panel 23, the air extracting pump 21 is secured above the hole of the aluminum panel 22 by using a screw, the bottom of the aluminum panel 22 is clad by the shell iron panel 23, the air-permeable adhesive tape 24 is pasted under the hole of the shell iron panel 23, and the air-permeable adhesive tape 24 and the shell iron panel 23 are secured to each other by using a double-faced adhesive tape 25.

In the manufacturing method, the molten glass includes the following ingredients by weight percentage: silicon dioxide 70%, aluminum oxide 4%, magnesium oxide 4%, calcium oxide 5%, boron oxide 5%, and sodium oxide 12%.

In one embodiment, when the wrapping material of which one surface does not include an aluminum foil is used as the outer wrapping material, one surface is made of NY15/MPET12/MEVOH15/PE50, and the other surface is made of NY15/MPET12/A17/PE50; or one surface is made of PET12/NY25/A16/HDPE50, and the other surface is made of NY25/MPET12/MEVOH12/HDPE50, where the numerals indicate thicknesses of the materials, in the unit of µm.

In another embodiment, when the wrapping material of which two surfaces do not include aluminum foils is used as the outer wrapping material, both of the two surfaces are made of NY15/MPET12/MEVOH15/PE50, or both of the two surfaces are made of NY25/MPET12/MEVOH12/HDPE50, where the numerals indicate thicknesses of the materials, in the unit of µm.

The foregoing embodiments are merely preferred embodiments of the present invention rather than limitations in other forms to the present invention.

## Claims

1. A method for manufacturing a vacuum heat-insulating panel, comprising the steps of:
(a) manufacturing a core material, comprising pouring molten glass at a high temperature of 1100 °C to 1300 °C into a centrifugal head spinning at a high speed, wherein the spinning speed of the centrifugal head is 2000 rpm to 2500 rpm, flinging out fiber filaments, and forming a uniform laminated structure by using a bottom suction apparatus, wherein the diameter of the fiber filament is 1 µm to 3 µm;
(b) wrapping with an outer wrapping material, comprising placing a calcium oxide getter inside the core material, wrapping the core material with a composite wrapping material of which one surface or two surfaces do not comprise aluminum foils, and performing heat sealing on the outer wrapping material; and
(c) vacuumizing the core material sealed by the outer wrapping material in step (b), and forming a vacuum heat-insulating panel.

2. The method for manufacturing a vacuum heat-insulating panel according to claim 1, wherein the molten glass comprises the ingredients by weight percentage: silicon dioxide 60% to 80%, aluminum oxide 3% to 5%, magnesium oxide 3% to 5%, calcium oxide 5% to 10%, boron oxide 5% to 10%, and another oxide 4% to 20%.

3. A vacuum heat-insulating panel, obtained by a method according to claim 2, comprising:
an outer wrapping material; and
a core material,
wherein a getter is provided inside the core material, a composite wrapping material of which one surface or two surfaces do not comprise aluminum foils is used as the outer wrapping material, and the core material is an assembly of horizontal glass fibers that has a uniform laminated structure, wherein the diameters of the glass fibers are 1 µm to 3 µm and wherein the glass fibers comprise the ingredients by weight percentage: silicon dioxide 60% to 80%, aluminum oxide 3% to 5%, magnesium oxide 3% to 5%, calcium oxide 5% to 10%, boron oxide 5% to 10%, and another oxide 4% to 20%.

4. The vacuum heat-insulating panel according to claim 3, wherein when the wrapping material of which one surface does not comprise an aluminum foil is used as the outer wrapping material, the one surface is made of NY15/MPET12/MEVOH15/PE50, and the other surface is made of NY15/MPET12/A17/PE50; or the one surface is made of PET12/NY25/A16/HDPE50, and the other surface is made of NY25/MPET12/MEVOH12/HDPE50, wherein the numerals indicate thicknesses of the materials in the unit of µm.

5. The vacuum heat-insulating panel according to claim 3, wherein when the wrapping material of which two surfaces do not comprise aluminum foils is used as the outer wrapping material, both of the two surfaces are made of NY15/MPET12/MEVOH15/PE50, or both of the two surfaces are made of NY25/MPET12/MEVOH12/HDPE50, wherein the numerals indicate thicknesses of the materials in the unit of µm.

## Patentansprüche

1. Verfahren zur Herstellung einer Vakuumwärmedämmplatte, umfassend die folgenden Schritte:
(a) Herstellen eines Kernmaterials, umfassend Gießen von geschmolzenem Glas mit einer hohen Temperatur von 1100 °C bis 1300 °C in einen sich mit einer hohen Geschwindigkeit drehenden Schleuderkopf, wobei die Umdrehungsgeschwindigkeit des Schleuderkopfs 2000 U/min bis 2500 U/min beträgt, Herausschleudern von Faserfilamenten und Ausbilden einer gleichmäßigen Schichtstruktur durch Verwendung einer unteren Saugvorrichtung, wobei der Durchmesser des Faserfilaments 1 µm bis 3 µm beträgt;
(b) Umhüllen mit einem äußeren Umhüllungsmaterial, umfassend Unterbringen eines Calciumoxid-Getters im Inneren des Kernmaterials, Umhüllen des Kernmaterials mit einem umhüllenden Verbundmaterial, von dem eine Oberfläche oder zwei Oberflächen keine Aluminiumfolien umfassen, und Durchführen von Heißsiegeln des äußeren Umhüllungsmaterials; und
(c) Vakuumieren des in Schritt (b) mit dem äußeren Umhüllungsmaterial abgedichteten Kernmaterials, und Bilden einer Vakuumwärmedämmplatte.

2. Verfahren zur Herstellung einer Vakuumwärmedämmplatte nach Anspruch 1, wobei das geschmolzene Glas die folgenden Bestandteile, in Gewichtsprozent, umfasst: 60 % bis 80 % Siliciumdioxid, 3 % bis 5 % Aluminiumoxid, 3 % bis 5 % Magnesiumoxid, 5 % bis 10 % Calciumoxid, 5 % bis 10 % Boroxid und 4 % bis 20 % anderes Oxid.

3. Vakuumwärmedämmplatte, erhalten durch ein Verfahren nach Anspruch 2, umfassend:
ein äußeres Umhüllungsmaterial; und
ein Kernmaterial,
wobei ein Getter im Inneren des Kernmaterials vorgesehen ist, ein Umhüllungsmaterial, von dem eine Oberfläche oder zwei Oberflächen keine Aluminiumfolien umfassen, als äußeres Umhüllungsmaterial verwendet wird, und das Kernmaterial eine Anordnung von horizontalen Glasfasern ist, die eine gleichmäßige Schichtstruktur aufweist, wobei die Durchmesser der Glasfasern 1 µm bis 3 µm betragen und wobei die Glasfasern die folgenden Bestandteile, in Gewichtsprozent, umfassen: 60 % bis 80 % Siliciumdioxid, 3 % bis 5 % Aluminiumoxid, 3 % bis 5 % Magnesiumoxid, 5 % bis 10 % Calciumoxid, 5 % bis 10 % Boroxid und 4 % bis 20 % anderes Oxid.

4. Vakuumwärmedämmplatte nach Anspruch 3, wobei, wenn das Umhüllungsmaterial, von dem eine Oberfläche keine Aluminiumfolie umfasst, als äußeres Umhüllungsmaterial verwendet wird, die eine Oberfläche hergestellt ist aus NY15/MPET12/MEVOH15/PE50, und die andere Oberfläche hergestellt ist aus NY15/MPET12/A17/PE50; oder die eine Oberfläche hergestellt ist aus PET12/NY25/A16/HDPE50, und die andere Oberfläche hergestellt ist aus NY25/MPET12/MEVOH12/HDPE50, wobei die Zahlen die Dicken der Materialien in der Einheit µm angeben.

5. Vakuumwärmedämmplatte nach Anspruch 3, wobei, wenn das Umhüllungsmaterial, von dem zwei Oberflächen keine Aluminiumfolien umfassen, als äußeres Umhüllungsmaterial verwendet wird, beide der zwei Oberflächen hergestellt sind aus NY15/MPET12/MEVOH15/PE50, oder beide der zwei Oberflächen hergestellt sind aus NY25/MPET12/MEVOH12/HDPE50, wobei die Zahlen die Dicken der Materialien in der Einheit µm angeben.

## Revendications

1. Procédé de fabrication d'un panneau d'isolation thermique sous vide, comprenant les étapes de :
(a) fabriquer un matériau de base, comprenant verser du verre fondu à une température élevée de 1 100 °C à 1 300 °C dans une tête centrifuge tournant à grande vitesse, la vitesse de rotation de la tête centrifuge étant de 2 000 rpm à 2 500 rpm, éjectant des filaments de fibres et format une structure laminée uniforme en utilisant un appareil d'aspiration de fond, le diamètre du filament de fibre étant de 1 µm à 3 µm ;
(b) envelopper avec un matériau enveloppant extérieur, comprenant placer un getter en oxyde de calcium dans le matériau de base, envelopper le matériau de base avec un matériau enveloppant composite dont une surface ou deux surfaces ne comprennent pas de feuilles d'aluminium, et effectuer un scellement thermique sur le matériau enveloppant extérieur ; et
(c) mettre sous vide le matériau de base scellé par le matériau enveloppant extérieur à l'étape (b), et former un panneau d'isolation thermique sous vide.

2. Procédé de fabrication d'un panneau d'isolation thermique sous vide selon la revendication 1, le verre fondu comprenant les ingrédients suivants, en pourcentage massique : dioxyde de silicium de 60% à 80%, oxyde d'aluminium de 3% à 5%, oxyde de magnésium de 3% à 5%, oxyde de calcium de 5% à 10%, oxyde de bore de 5% à 10%, et un autre oxyde de 4% à 20%.

3. Panneau d'isolation thermique sous vide, obtenu par un procédé selon la revendication 2, comprenant :
un matériau enveloppant extérieur ; et
un matériau de base,
un getter étant fourni à l'intérieur du matériau de base, un matériau enveloppant composite dont une surface ou deux surfaces ne comprennent pas de feuille d'aluminium étant utilisé comme matériau enveloppant extérieur, et le matériau de base étant un assemblage de fibres de verre horizontales ayant une structure laminée uniforme, les diamètres des fibres de verre étant de 1 µm à 3 µm et les fibres de verre comprenant les ingrédients suivants, en pourcentage massique : dioxyde de silicium de 60% à 80%, oxyde d'aluminium de 3% à 5%, oxyde de magnésium de 3% à 5%, oxyde de calcium de 5% à 10%, oxyde de bore de 5% à 10%, et un autre oxyde de 4% à 20%.

4. Panneau d'isolation thermique sous vide selon la revendication 3, le matériau enveloppant dont une surface ne comprend pas de feuille d'aluminium étant utilisé comme matériau enveloppant extérieur, l'une surface étant faite en NY15/MPET12/MEVOH15/PE50, et l'autre surface étant faite en NY15/MPET12/A17/PE50 ; ou l'une surface étant faite en PET12/NY25/A16/HDPE50, et l'autre surface étant faite en NY25/MPET12/MEVOH12/HDPE50, les chiffres indiquant les épaisseurs des matériaux en µm.

5. Panneau d'isolation thermique sous vide selon la revendication 3, le matériau enveloppant dont deux surfaces ne comprennent pas de feuille d'aluminium étant utilisé comme matériau enveloppant extérieur, les deux surfaces étant faites en NY15/MPET12/MEVOH15/PE50, ou les deux surfaces étant faites en NY25/MPET12/MEVOH12/HDPE50, les chiffres indiquant les épaisseurs des matériaux en µm.
